# EUROPEAN PATENT SPECIFICATION

(11) **EP 4 655 692 B1**
(45) Date of publication and mention of the grant of the patent: **02.12.2026**
(21) Application number: 23712490.4
(22) Date of filing: 16.03.2023
(51) Int. Cl.: G06F 21/57

(54) **RANDOM NUMBER AND HARDWARE VALUE IN A SECURE ELECTRONIC SYSTEM**
ZUFALLSZAHL UND HARDWAREWERT IN EINEM SICHEREN ELEKTRONISCHEN SYSTEM
NOMBRE ALÉATOIRE ET VALEUR MATÉRIELLE DANS UN SYSTÈME ÉLECTRONIQUE SÉCURISÉ

(43) Date of publication of application: 03.12.2025
(73) Proprietor: Huawei Technologies Co., Ltd., Shenzhen, Guangdong 518129 (CN)
(72) Inventor: OSTERGAARD DELEURAN, Thomas, 80992 Munich (DE); GJORUP, Karsten, 80992 Munich (DE)
(74) Representative: Gill Jennings & Every LLP
(86) International application number: PCT/EP2023/056710
(87) International publication number: WO 2024/188464

(56) References cited:
- US-A1- 2016 065 378
- US-A1- 2021 286 871
- HA-YONG JEON ET AL: "Study of an Improved AKA Protocol Based on the SIM Card", CONVERGENCE AND HYBRID INFORMATION TECHNOLOGY, 2008. ICHIT '08. INTERNATIONAL CONFERENCE ON, IEEE, PISCATAWAY, NJ, USA, 28 August 2008 (2008-08-28), pages 564 - 568, XP031319765, ISBN: 978-0-7695-3328-5

## Description

### Technical Field

Embodiments of the invention relate to the use of a security module random number and a hardware value in a secure electronic system. Furthermore, embodiments of the invention also relate to a secure electronic system comprising a security module, a computer system and an attestation server, and also to corresponding methods and a computer program.

### Background

Secure electronic systems often use a Trusted Platform Module (TPM) as a key component for controlling different security functions for a computer system e.g., for measured boot and root of trust procedures.

The security functions may also be used to protect data assets as the TPM would disallow access to protected data, in case the computer system has been modified in a malicious way by an attacker such as by a malicious software (SW). The idea of the TPM in this particular case is that the TPM can protect a security key in such a way that only a trusted computer system communicating with the TPM can access and use the security key for assessing data by decryption.

The TPM may also be used for other security functions e.g., in remote attestation of a computer system involving an attestation server such as a cloud end server. In such cases the computer system needs to prove itself to the attestation server in order to be trusted and the TPM will be involved in such an attestation procedure.

US 2016/065378 A1 discloses is an apparatus for generating a hardware-based OTP which is impossible to duplicate. The apparatus for generating the OTP can comprise a PUF for generating a unique PIN. In addition, provided is a method which is used for 2-Factor authentication with the apparatus for generating the OTP and existing secure elements. "Study of an improved AKA protocol based on the SIM card", Ha-Yong Jeon, Yun-Seok Lee, Min-Soo Jung, International Conference on Convergence and Hybrid Information Technology 2008, 10.1109/ICHIT.2008.221, discloses security problems associated with the 2nd and 2.5th GSM network environment and consequently proposes a security protocol providing safe services in the third generation network environment as well as the second generation network environment, which may provide significantly strengthened security by allowing authentication of SIM users between SIM and ME and authentication among SIM/ME/AuC as well as reduced complexity in key agreement. US 2016/065378 A1 discloses an apparatus for providing a one-time password (OTP) and an authentication method using the OTP and, more particularly, to an OTP providing apparatus and an authentication method to prevent a security attack.

### Summary

An objective of embodiments of the invention is to provide a solution which mitigates or solves the drawbacks and problems of conventional solutions.

Another objective of embodiments of the invention is to provide a solution for improved security in a secure electronic system.

The above and further objectives are solved by the subject matter of the independent claims, which define the invention. Further embodiments of the invention can be found in the dependent claims.

According to a first aspect of the invention, the above mentioned and other objectives are achieved with a computer system being configured to:
receive a security module random number from a security module;
receive a HASH function from the security module and/or from an attestation server;
compute a first HASH value based on the security module random number and a hardware value of the computer system; and
transmit the first HASH value to the security module.

A random number in this disclosure may also be denoted a so-called number once, i.e., a nonce. The security module random number is a random number which is used together with the hardware value for computing first HASH values for verification of the computer system in the secure electronic system.

An advantage of the computer system according to the first aspect is that the computation of the first HASH values is impacted by the security module random number and the hardware value leading to unpredictable first HASH values seen from an attacker's perspective. Thereby, improved security is provided in the secure electronic system.

In an implementation form of a computer system according to the first aspect, the computer system is further configured to:
compute the first HASH value further based on an executed instruction value.

An advantage with this implementation form is that computing the first HASH value further based on the executed instruction value ensures that the computation result only can be produced having executed said instructions in the hardware of the computer system. The nature and order of these instructions identifies the type of code image being executed, which can then indirectly be verified through the HASH value computation.

In an implementation form of a computer system according to the first aspect, the computer system is further configured to:
compute a computer system footprint value based on the executed instruction value, the hardware value and a Boolean operator; and
compute the first HASH value further based on the computer system footprint value.

An advantage with this implementation form is that the HASH value computation not only depends on the actual code image executing, but also the unique hardware value associated with the computer system running the code. This ensures provenance of the HASH value computation for improved safety since the possibility of mimicking this HASH value computation procedure is even more reduced.

In an implementation form of a computer system according to the first aspect, the computer system is further configured to:
compute the first HASH value further based on a code image of the computer system.

An advantage with this implementation form is that the generated first HASH value depends on the security module random number, the unique hardware value and the code image, which means that none of them can be changed without impacting the first HASH value.

In an implementation form of a computer system according to the first aspect, wherein the hardware value is embedded in a hardware of the computer system.

An advantage with this implementation form is that the hardware value is persistent and immutable. Furthermore, it enables the possibility to shield the embedded value from unprivileged software running on the computer system.

In an implementation form of a computer system according to the first aspect, wherein the hardware value is an e-fuse value or a physical unclonable function value.

An advantage with this implementation form is that the hardware value is persistent and immutable. For the e-fuse value an advantage is that the production flow can specify and burn the e-fuse value, and in that way know the exact hardware value. Afterwards the e-fuse value might not be accessible by software. For the physical unclonable function (PUF) an advantage is that the cost of the building in the unique hardware value is less costly.

In an implementation form of a computer system according to the first aspect, the computer system is further configured to
transmit a random number request to the security module previous to receiving the security module random number.

An advantage with this implementation form is that the transfer of the security module random number may be controlled by the computer system which ensures that the transfer is aligned with the boot procedure of the computer system. Furthermore, the security module random number only becomes known to the computer system once requested and different security module random numbers could be provided per individual random number request.

In an implementation form of a computer system according to the first aspect, the computer system is further configured to
receive a security module random number from the security module for each hardware boot procedure of the computer system.

An advantage with this implementation form is that even a single device replay attack is not possible as the security module random number is new at every boot up of the computer system.

In an implementation form of a computer system according to the first aspect, the computer system is further configured to:
compute the first HASH value further based on a boot image of a hardware boot procedure of the computer system.

An advantage with this implementation form is that each calculation of the first HASH value using the security module random number will be different, hence a single device replay attack is not possible as the security module random number is new at every boot up of the computer system.

The computer system is configured to
receive a HASH function from the security module and/or from an attestation server; and
compute the first HASH value further based on the HASH function.

An advantage with this implementation form is that it is more difficult to make an alternative to the calculation of the first HASH value, e.g., by using table lookup, to successfully fulfill the verification of the computer system. This implementation form also enables algorithm agility in the secure electronic system since different HASH functions can be used for different security functions.

According to a second aspect of the invention, the above mentioned and other objectives are achieved with a security module for a secure electronic system, the security module being configured to:
transmit a security module random number for computing a HASH value to a computer system;
transmit a HASH function for computing a HASH value to the computer system;
receive a first HASH value from the computer system, the first HASH value being computed based on the security module random number and a hardware value of the computer system; and
determine a first security policy for the computer system based on the first HASH value.

An advantage of the security module according to the second aspect is that the computer system must use the security module random number and the hardware value for performing a computation of the first HASH value instead of just providing a first HASH value. Thereby, e.g., existing attack mechanisms where a known first HASH value is embedded in a malicious system is no longer possible. Hence, a more secure system is provided.

In an implementation form of a security module according to the second aspect, the security module is further configured to
determine the first security policy for the computer system further based on the security module random number.

An advantage with this implementation form is that the first HASH value is unique for each security module random number which prevents replay or reuse of old first HASH values and thereby protects against malicious attacks. Furthermore, the security module can itself evaluate whether the first policy is fulfilled or not, and thus does not need to rely on communication with an external party, e.g., an attestation server.

In an implementation form of a security module according to the second aspect, the security module is further configured to
receive a second HASH value from an attestation server; and
determine the first security policy for the computer system further based on the second HASH value.

An advantage with this implementation form is that the first HASH value from the computer system can be validated based on a second HASH value received from an attestation server. Thereby, improved security is provided in the secure electronic system.

In an implementation form of a security module according to the second aspect, the security module is further configured to
transmit the security module random number and the first HASH value to an attestation server;
receive a second security policy for the computer system from the attestation server; and
determine the first security policy for the computer system further based on the second security policy.

An advantage with this implementation form is that the first security policy, defining e.g., the behavior and/or capability of the computer system, is directly dependent on validation by the attestation server of the first HASH value and the security module random number. Thus, the security module does not have to depend on access to boot/code data, but can instead rely on verification being performed by the attestation server.

In an implementation form of a security module according to the second aspect, the security module is configured to:
receive the security module random number from an attestation server.

An advantage with this implementation form is that the attestation server may speed up the verification process by having up front calculated an expected second HASH value for the computer system based on a pre-generated security random number ultimately shared with the security module. Another advantage is that the attestation flow to the security module can be offloaded.

In an implementation form of a security module according to the second aspect, the first security policy for the computer system comprises one or more in the group: a security state, a secure key, a password, a data access, a hardware access, and an attestation procedure.

An advantage with this implementation form is that the behavior and/or capability of the computer system can be configured based on the first security policy.

In an implementation form of a security module according to the second aspect, the security module is further configured to
obtain a security module random number for each hardware boot procedure of the computer system; and
transmit the security module random number to the computer system for each hardware boot procedure of the computer system.

An advantage with this implementation form is that each calculation of a first HASH value using the security module random number will result in different values. Hence, a single device replay attack is not possible as the security random number is new at every boot up of the computer system.

In an implementation form of a security module according to the second aspect, the security module is further configured to
transmit the security module random number to the computer system upon receiving a random number request from the computer system.

An advantage with this implementation form is that the transfer of the security module random number may be controlled by the computer system which ensures that the transfer is aligned with the boot procedure of the computer system. Furthermore, the security module random number only becomes known to the computer system once requested and different security module random numbers could be provided per individual random number request.

The security module is configured to
transmit a HASH function for computing a HASH value to the computer system.

An advantage with this implementation form is that it is more difficult to make an alternative to the calculation of HASH values, e.g., by using table lookup, to successfully fulfill the verification of the computer system. This implementation form also enables algorithm agility in the secure electronic system since different HASH functions can be used for different security functions.

According to a disclosed implementation, an attestation server for a secure electronic system may be configured to
obtain a security module random number for computing HASH values, the security module random number being associated with a security module and a computer system; and
compute a second HASH value for the computer system based on the security module random number and a hardware value of the computer system.

An advantage of the attestation server is that it has the ability to calculate a second HASH value to be used for further verification of the computer system, i.e., the attestation server can replay and confirm that the HASH computations has been performed by the computer system. Thereby, improved security in the secure electronic system is provided.

The operations described above for the computer system may be performed as a method for a computer system, the method comprising:
receiving a security module random number from a security module;
receiving a HASH function from the security module and/or from an attestation server;
computing a first HASH value based on the security module random number and a hardware value of the computer system; and
transmitting the first HASH value to the security module.

The method can be extended into implementation forms corresponding to the implementation forms of the computer system according to the first aspect. Hence, an implementation form of the method comprises the feature(s) of the corresponding implementation form of the security module.

The advantages of the methods are the same as those for the corresponding implementation forms of the computer system according to the first aspect.

The operations described above for the security module may be performed as a method for a security module, the method comprising:
transmitting a security module random number for computing a HASH value to a computer system;
transmiting a HASH function for computing a HASH value to the computer system;
receiving a first HASH value from the computer system, the first HASH value being computed based on the security module random number and a hardware value of the computer system; and
determining a first security policy for the computer system based on the first HASH value.

The method can be extended into implementation forms corresponding to the implementation forms of the security module according to the second aspect. Hence, an implementation form of the method comprises the feature(s) of the corresponding implementation form of the computer system.

The advantages of the methods are the same as those for the corresponding implementation forms of the security module according to the second aspect.

Further applications and advantages of embodiments of the invention will be apparent from the following detailed description.

### Brief Description of the Drawings

The appended drawings are intended to clarify and explain different embodiments of the invention, in which:
- Fig. 1 shows a computer system according to embodiments of the invention;
- Fig. 2 shows a flow chart of a method for a computer system according to embodiments of the invention;
- Fig. 3 shows a security module according to embodiments of the invention;
- Fig. 4 shows a flow chart of a method for a security module according to embodiments of the invention;
- Fig. 5 shows an attestation server according to embodiments of the invention;
- Fig. 6 shows a flow chart of a method for an attestation server according to embodiments of the invention;
- Fig. 7 and 8 show non-limiting examples of different system architectures according to embodiments of the invention; and
- Fig. 9 to 11 show signaling diagrams according to embodiments of the invention.

### Detailed Description

As aforementioned, the TPM is used in secure electronic systems for verifying that a computer system is trustworthy, i.e., that the computer system can be trusted. However, a drawback with the current use of TPM is that the communication between the TPM and the computer system has its weaknesses, which can be exploited by an attacker to get access to different security functions. The attacker may get access to the so-called good HASH values that is used by the computer system to verify its identity towards the TPM. The attacker may in this respect use an interposer or to completely replace the computer system with a malicious computer system for eavesdropping or recording the communication between the computer system and the security module. Thereby, the attacker may get access to the good HASH values and use them for identification towards the TPM so as to get access to security functions.

A conventional solution to the above stated weakness is to physically build the TPM into the computer system so that the communication between the TPM and the computer system cannot be logged. Another advantage with this conventional solution is that any physical modification of the computer system would have a high risk of also breaking the TPM module, which will prevent the computer system from working under a malicious system attack. However, the conventional solution is costly to implement. Furthermore, in many cases the computer system and the TPM cannot be physically built together for different reasons, e.g., due to technology differences, different manufactures, modular system approach, etc. Moreover, the conventional solution of physically combining the computer system and the TPM is no guarantee that attacks cannot be performed since a malicious software can still fake the good HASH values and make the TPM believe that the computer system is trustworthy even though that is not the case.

Therefore, it is herein presented a solution mitigating or fully solving the drawbacks of conventional solutions. A general aspect of the invention is the use of a security module random number and a hardware value of the computer system for generating HASH values for identification and verification of the computer system in a secure electronic system.

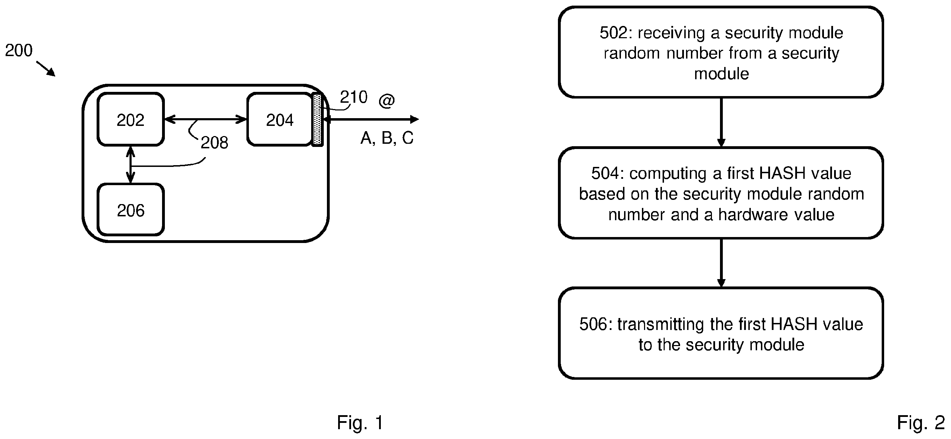

Fig. 1 shows a computer system 200 for a secure electronic system 500 according to an embodiment of the invention. In the embodiment shown in Fig. 1, the computer system 200 comprises a processor 202, a transceiver 204 and a memory 206. The processor 202 is coupled to the transceiver 204 and the memory 206 by communication means 208 known in the art. The computer system 200 further comprises a communication interface 210 coupled to the transceiver 204, which means that the computer system 200 is configured for communications in a secure electronic system 500 e.g., with a security module and an attestation server.

The processor 202 may be referred to as one or more general-purpose CPU, one or more digital signal processor (DSP), one or more application-specific integrated circuit (ASIC), one or more field programmable gate array (FPGA), one or more programmable logic device, one or more discrete gate, one or more transistor logic device, one or more discrete hardware component, or one or more chipsets. The memory 206 may be a read-only memory, a random access memory (RAM), or a non-volatile RAM (NVRAM). The transceiver 204 may be a transceiver circuit, a power controller, or an interface providing capability to communicate with other communication modules or communication devices. The transceiver 204, memory 206 and/or processor 202 may be implemented in separate chipsets or may be implemented in a common chipset. That the computer system 200 is configured to perform certain actions can in this disclosure be understood to mean that the computer system 200 comprises suitable means, such as e.g., the processor 202 and the transceiver 204, configured to perform the actions.

According to embodiments of the invention, the computer system 200 is configured to receive a security module random number @ from a security module 100. The computer system 200 is further configured to compute at least one first HASH value A, B, C based on the security module random number @ and a hardware value of the computer system 200. The computer system 200 is further configured to transmit the first HASH value A, B, C to the security module 100.

Fig. 2 shows a flow chart of a corresponding method 500 which may be executed in a computer system 200, such as the one shown in Fig. 1. The method 500 comprises receiving 502 a security module random number @ from a security module 100. The method 500 further comprises computing 504 at least one first HASH value A, B, C based on the security module random number @ and a hardware value of the computer system 200. The method 500 further comprises transmitting 506 the first HASH value A, B, C to the security module 100.

The computer system 200 may be any type of computer system, such as a personal computer (PC), a PC alike system, a server of a network, a base station of a communication system, a router, an IoT device or any other ICT (Information and Communication Technology) product.

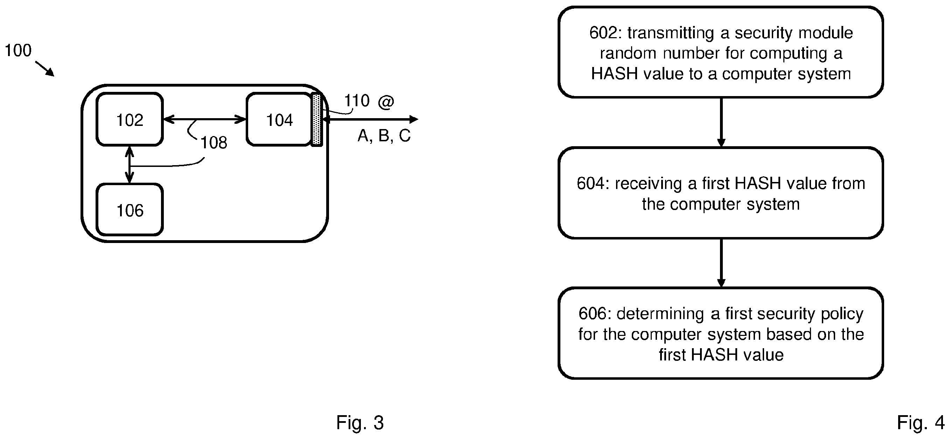

Fig. 3 shows a security module 100 for a secure electronic system 500 according to an embodiment of the invention. In the embodiment shown in Fig. 3, the security module 100 comprises a processor 102, a transceiver 104 and a memory 106. The processor 102 is coupled to the transceiver 104 and the memory 106 by communication means 108 known in the art. The security module 100 further comprises a communication interface 110 coupled to the transceiver 104, which means that the security module 100 is configured for communications in a secure electronic system 500, e.g., with computer systems and attestation servers.

The processor 102 may be referred to as one or more general-purpose CPU, one or more digital signal processor (DSP), one or more application-specific integrated circuit (ASIC), one or more field programmable gate array (FPGA), one or more programmable logic device, one or more discrete gate, one or more transistor logic device, one or more discrete hardware component, or one or more chipsets. The memory 106 may be a read-only memory, a random access memory (RAM), or a non-volatile RAM (NVRAM). The transceiver 104 may be a transceiver circuit, a power controller, or an interface providing capability to communicate with other communication modules or communication devices. The transceiver 104, memory 106 and/or processor 102 may be implemented in separate chipsets or may be implemented in a common chipset. That the security module 100 is configured to perform certain actions can in this disclosure be understood to mean that the security module 100 comprises suitable means, such as e.g., the processor 102 and the transceiver 104, configured to perform the actions.

According to embodiments of the invention, the security module 100 is configured to transmit a security module random number @ for computing a HASH value to a computer system 200. The security module 100 is further configured to receive at least one first HASH value A, B, C from the computer system 200. The first HASH value A, B, C is being computed based on the security module random number @ and a hardware value of the computer system 200. The security module 100 is further configured to determine a first security policy for the computer system 200 based on the first HASH value A, B, C.

Fig. 4 shows a flow chart of a corresponding method 600 which may be executed in a security module 100, such as the one shown in Fig. 3. The method 600 comprises transmitting 602 a security module random number @ for computing a HASH value to a computer system 200. The method 600 further comprises receiving 604 at least one first HASH value A, B, C from the computer system 200. The first HASH value A, B, C is being computed based on the security module random number @ and a hardware value of the computer system 200. The method 600 further comprises determining 606 a first security policy for the computer system 200 based on the first HASH value A, B, C.

The security module 100 may be a TPM, a trusted cryptographic module (TCM) or a trusted platform control module (TPCM) or any kind of hardware (HW) security module (HSM), secure enclave or trusted execution environment which is capable of acting as a root of trust for a secure electronic system.

A security module random number @ may have the form of a large integer, so called big number, or series of octets. The size of the security module random number @ may be implementation specific. The security module random number @ may be generated from a random number generator or received from an external party, e.g., from an attestation server providing random number to the security module 100. The entropy of the security module random number @ and whether it is a truly-random or a pseudo-random may be implementation specific.

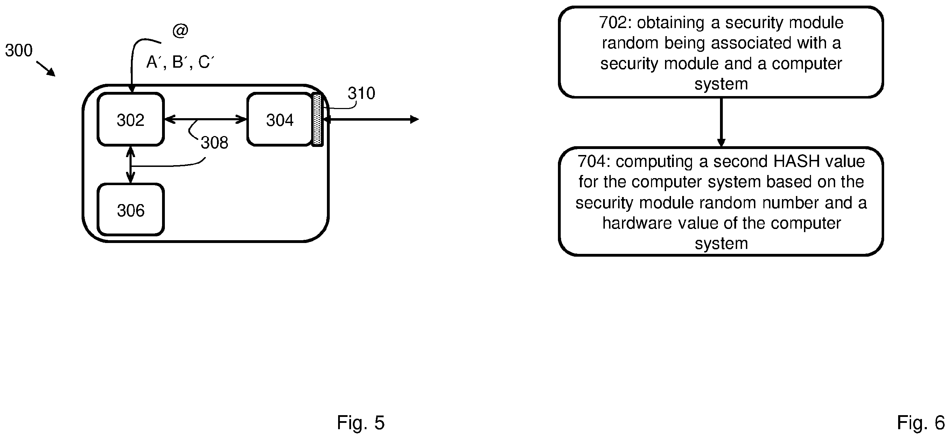

Fig. 5 shows an attestation server 300 for a secure electronic system 500 according to an embodiment of the invention. In the embodiment shown in Fig. 5, the attestation server 300 comprises a processor 302, a transceiver 304 and a memory 306. The processor 302 is coupled to the transceiver 304 and the memory 306 by communication means 308 known in the art. The attestation server 300 comprises a communication interface 310 coupled to the transceiver 304 for communications in a secure electronic system 500 e.g., with a security module and a computer system.

The processor 302 may be referred to as one or more general-purpose CPU, one or more digital signal processor (DSP), one or more application-specific integrated circuit (ASIC), one or more field programmable gate array (FPGA), one or more programmable logic device, one or more discrete gate, one or more transistor logic device, one or more discrete hardware component, one or more chipset. The memory 306 may be a read-only memory, a random access memory (RAM), or a non-volatile RAM (NVRAM). The transceiver 304 may be a transceiver circuit, a power controller, or an interface providing capability to communicate with other communication modules or communication devices, such as network nodes and network servers. The transceiver 304, the memory 306 and/or the processor 302 may be implemented in separate chipsets or may be implemented in a common chipset. That the attestation server 300 is configured to perform certain actions can in this disclosure be understood to mean that the attestation server 300 comprises suitable means, such as e.g., the processor 302 and the transceiver 304, configured to perform the actions.

According to embodiments of the invention, the attestation server 300 is configured to obtain a security module random number @ for computing HASH values. The security module random number @ is associated with a security module 100 and a computer system 200. The attestation server 300 is further configured to compute at least one second HASH value A', B', C' for the computer system 200 based on the security module random number @ and a hardware value of the computer system 200.

Fig. 6 shows a flow chart of a corresponding method 700 which may be executed in an attestation server 300, such as the one shown in Fig. 5. The method 700 comprises obtaining 702 a security module random number @ for computing HASH values. The security module random number @ being associated with a security module 100 and a computer system 200. The method 700 further comprises computing 704 at least one second HASH value A', B', C' for the computer system 200 based on the security module random number @ and a hardware value of the computer system 200. The second HASH value A', B', C' computed by the attestation server 300 may be used in a number of different implementation cases which will be described in the following disclosure.

The attestation server 300 may be any electronic communication device acting as an attestation endpoint, such as a remote PC, a remote server, a cloud server, a LAN server or any other trusted electronic computing device.

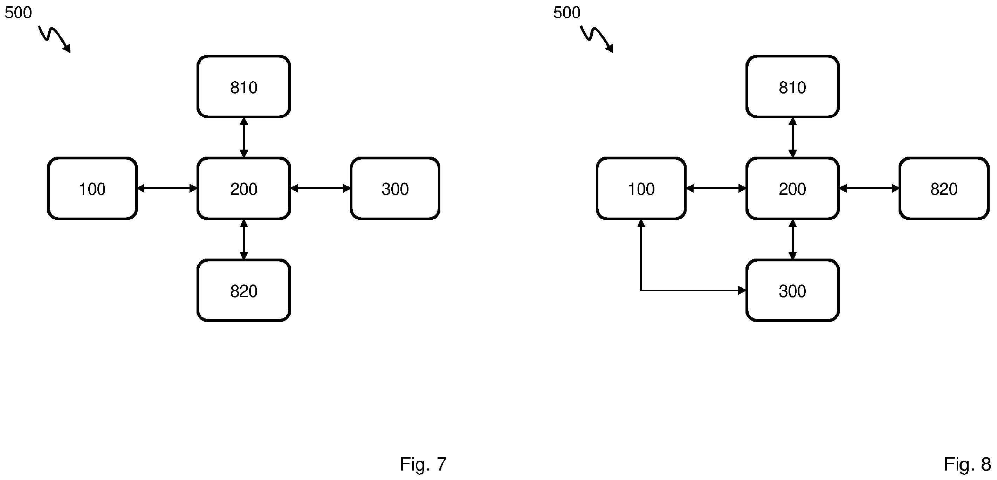

Fig. 7 and 8 illustrate two non-limiting examples of system architecture related to the secure electronic system 500 herein presented. The secure electronic system 500 may be any combined electronic system comprising any kind of ICTs and server endpoints e.g., a payment framework of a bank or platform for client/server trust establishment services. The communication between the different devices and entities of the secure electronic system 500 may be performed via suitable communication interfaces illustrated with arrows in Fig. 7 and 8. The communication interfaces could e.g., at chip level be a serial peripheral interface (SPI), a low pin count (LPC), an inter-integrated circuit (I²C), universal serial bus (USB), a peripheral component interconnect express (PCIe), and at device level be a wired interface e.g., Ethernet, optical e.g., fiber connection, wireless e.g., 3GPP 5G, Bluetooth or any other suitable communication methods and protocols.

Fig. 7 shows the exemplary system architecture when the computer system 200 is configured as an intermediate device between the security module 100 and the attestation server 300 in the secure electronic system 500. This implies that the communication between mentioned security module 100 and attestation server 300 is performed via the computer system 200 by e.g., using suitable communication procedures and protocols which may be standardized or not. The secure electronic system 500 further comprises one more security resources 810, e.g., data resources, hardware resources, software resources, communication resources, etc. The secure electronic system 500 may also comprise one or more security procedures 820, e.g., authentication procedures, attestation procedures, verification procedures, etc. The security resources 810 and security procedures 820 should be protected from malicious attacks.

Fig. 8 on the other hand shows the system architecture in which there is a direct communication interface between the security module 100 and the attestation server 300 contrary to the example in Fig. 7. Hence, the communication therebetween does not have to be performed via the computer system 200 as shown in Fig. 7. It may however be noted that some communication may be performed directly between the security module 100 and the attestation server 300 and some communication via the computer system 200. Hence, a combination of direct and indirect communication between the devices of the secure electronic system 500 is also possible according to embodiments of the invention. It is also noted that the system architecture in Fig. 8 comprises security resources 810 and security procedures 820 as described previously.

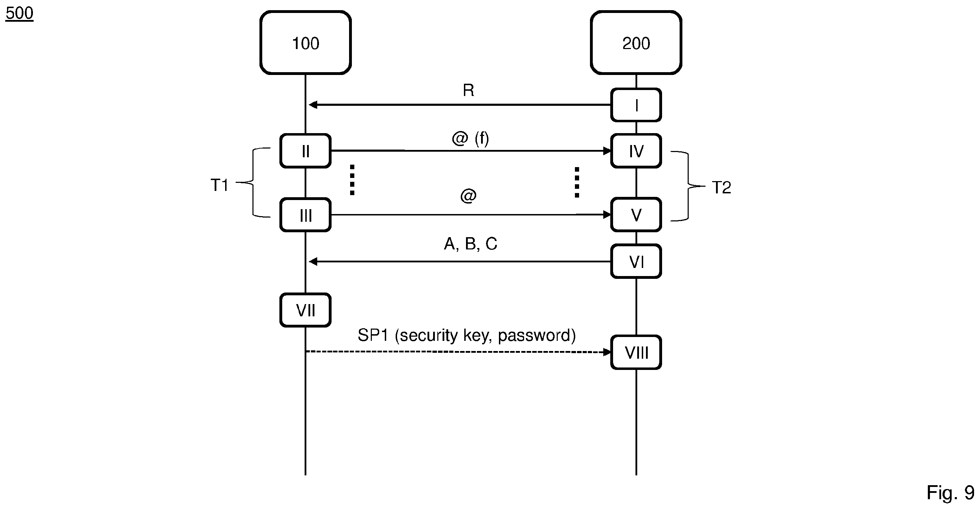

Fig. 9 shows a signaling diagram illustrating the interaction between the security module 100 and the computer system 200 according to further embodiments of the invention.

In step I in Fig. 9, the computer system 200 transmits a random number request R to the security module 100 in a request message previous to receiving a security module random number @ from the security module 100. The random number request R may explicitly or implicitly indicate a request for receiving a security module random number @ from the security module 100. The random number request R may also indicate other parameters associated with a security module random number @, such as the size of the security module random number @, timing, periodicity, etc. The random number request message may have a communication format defined by a security protocol which may be implementation specific. The communication format may range between a request without any parameters to a request providing information about the computer system 200 and possibly other system information.

In step II in Fig. 9, the security module 100 upon receiving the random number request R from the computer system 200 processes the random number request R to derive the information in the random number request R. Thereafter, the security module 100 transmits one or more security module random numbers @ to the computer system 200 in a response message during a time period T1 between step II and III in Fig. 9 according to the random number request R. Thereby, a request-response procedure between the computer system 200 and the security module 100 is established for the exchange of security module random numbers @ in the secure electronic system 500. The mentioned request-response procedure may in extended cases also involve the exchange of HASH values.

In embodiments of the invention, which is also disclosed in Fig. 9, the security module 100 may also transmit a first HASH function f for computing a first HASH value to the computer system 200. The signaling of the first HASH function f may be performed together with the signaling of the security module random numbers @ or in separate signaling dedicated for this specific purpose depending on the application.

It may be noted that during the time period T1 between step II and III in Fig. 9, multiple different security module random numbers @ may be signaled sequentially to the computer system 200 for improved security. Especially, multiple security module random numbers @ may be transmitted during a hardware boot procedure of the computer system 200. In such case, the security module 100 may obtain a security module random number @ for each hardware boot procedure and transmit the security module random number @ to the computer system 200 for each hardware boot procedure of the computer system 200. How the security module 100 gets aware of the boot procedure of the computer system 200 is implementation specific e.g., inferred by the security module boot state itself or by control signaling received from the computer system 200.

The security module 100 may obtain a security module random number @ in a number of different ways. In embodiments of the invention, the security module random number @ may be obtained from a dedicated Random Number Generator (RNG) accessible only to the security module 100 or from a trusted external entity, such as an attestation server 300. The practical transfer of the random number data can be through a separate bus, a serial interface, etc. The security module random number @ may be exchanged one by one according to a request-response procedure or in a bulk response where multiple random numbers may be contained in the same response message.

Correspondingly, during a time period T2 between steps IV and V in Fig. 9, the computer system 200 receives security module random number(s) @ from the security module 100, e.g., for each hardware boot procedure of the computer system 200. Thereupon, the computer system 200 computes one or more first HASH values A, B, C based on the received security module random number(s) @ and a hardware value of the computer system 200.

The hardware value of the computer system 200 can be embedded in a hardware of the computer system 200. The hardware value may be an e-fuse value or a physical unclonable function value. The hardware value may never be revealed directly (cf. readable) to a software program running in the computer system, but is indirectly affecting the calculation of the first HASH value. The hardware value can be embedded in hardware, in software, or saved in computer system storage media or be part of a connected peripherals being chip internal or external. The hardware value may be present in unencrypted form, encrypted form or derived out of information embedded in one or multiple hardware locations of the computer system 200. The use of the hardware value could be done by the software or the hardware of the computer system 200, where it is either visible or completely isolated from the software, part of the software, or completely isolated from being extracted, read or in any other way being accessed.

To further improve the security, the computer system 200 may in embodiments of the invention also use an executed instruction value for computing the first HASH value A, B, C. In this respect a computer system footprint value may be computed and used for computing the first HASH value A, B, C. The executed instruction value is a binary representation of programming steps taken in a currently running code. The executed instruction value defines the behavior of the central processing unit (CPU) for a fraction of the program executed. The footprint value is an expression of one or more programming steps carried out on a given hardware device running a given piece of software. A footprint, also called a fingerprint, is a system unique value, which can be used to identify a computer system or create a hardware unique information, which can be used to ensure authenticity of certain information.

The computer system footprint value may be computed based on the executed instruction value and the hardware value using a Boolean operator. Examples of Boolean operators that may be used are "OR", "AND" and "NOT" and operators that may be derived from these operators such as "XOR". The purpose of using Boolean operator in this context is to prevent a hacker from retrieving the hardware value of the computer system 200. This can be performed in different ways, including adding the hardware value to the HASH engine of the computer system 200 at a deterministic time in respect to the executed instructions. Thus, the processors' executed instruction is to bind the unique hardware value to a particular hardware. By using this operation as part of the HASH value calculation, it is possible to prove that the HASH value calculation was performed on this particular hardware device, i.e., the computer system 200, and not in another device.

Furthermore, if the value of the security module random number @ changes also the first HASH value will change since the HASH value is dependent on the value of the security module random number @. Therefore, for each new security module random number a new first HASH value will be generated. During a boot flow the computation and transmission of first HASH values may be handled by different SW images during the boot chain of the computer system 200. A boot chain is a series of boot images executing after each other until the operating system is booted and running on the computer system 200. For example, after power-on and booting from the read only memory (ROM) image, a SW image "a" takes over. Then it hands over the execution to SW image "b", and so on. Each of the SW images, including the ROM image, are responsible for computing the HASH value of the next SW image about to be executed. It may be noted that one or more SW images may be used in each computing instance for computing the next SW image. Thus, different SW images will communicate with the security module 100 and ask for security module random numbers and deliver first HASH values back to the security module 100.

In the computation of the first HASH value, the computer system 200 may also use a first HASH function f if the security module 100 has signaled such a first HASH function f to the computer system 200. It is noted that different HASH functions will result in different HASH values, so e.g., HASH functions f1(@) and f2(@) will output different HASH values if f1 and f2 are different HASH functions. Hence, different HASH functions may be used for different security functions in the secure electronic system 500.

A general approach for further improving the security in the present secure electronic system 500 is to consider code images and/or boot images of the computer system 200 when computing the first HASH value. Hence, in embodiments of the invention, the computer system 200 is configured to compute a first HASH value based on a security module random number @, the hardware value of the computer system and a code image of the computer system 200 and/or a boot image of a hardware boot procedure of the computer system 200. The computation may be based on entire code images and/or boot images; on one or more sections or parts of code images; and/or boot images of the computer system 200. When using a code image, the computation of the first HASH value will be performed during the runtime after boot up of the computer system 200, and when using a boot image the computation of the first HASH value will be performed during the boot procedure of the computer system 200.

In an example of computing first HASH values with the use of HASH function f, boot images "a", "b", "c" and code images "a'", "b"", "c'", the computer system 200 may
- compute a first HASH value A based on the security module random number @ received from the security module 100, the hardware value, and boot image "a" and code image "a'", i.e., A = f(@, a, a');
- compute a first HASH value B based on the security module random number @, the hardware value, and boot image "b" and code image "b'", i.e., B = f(@, b, b');
- compute a HASH value C based on the security module random number @, the hardware value, and boot image "c" and code image "c'", i.e., C = f(@, c, c'); and
- so on for any number of first HASH values.

The computation of HASH values may also be nested such that HASH value B is dependent on HASH value A, HASH value C is dependent on HASH value B, and so on. For example, HASH value B = f (A,...) and HASH value C = f (B,...) where "..." illustrates any further variables/parameters in the function for computing the HASH value.

In step VI in Fig. 9, the computer system 200 transmits the one or more computed first HASH values to the security module 100 for verification and authentication of the computer system 200.

In step VII in Fig. 9, the security module 100 based on the received first HASH values determines a first security policy (SP1) for the computer system 200 in a verification procedure for determining if the computer system 200 is to be trusted or not. A security policy may herein be understood as a policy for a computer system 200 defining access among other things to security resources and security procedures. In the following some non-limiting use cases are presented which may be defined and controlled by a security policy:
1. Security resource: the use of an entity e.g., a security key, data objects, password, etc. is tied to a given platform state corresponding to a first HASH value.
2. Security resource: sealing a hard disk encryption key to platform state and a security policy is defined specifying an expected first HASH value. The security policy will only allow the release of a hard disk encryption key if the first HASH value is recorded and present in the security module 100.
3. Security procedure: a security policy is defined specifying an expected first HASH value for a virtual private network (VPN) key. The security policy will only allow the usage of a VPN private key if the first HASH value is recorded and present in the security module 100.
4. Security procedure: securely passing a password from an operating system (OS) present to an OS absent environment: IT administration creates sealed administrator password based on a first HASH value present when a basic input/output system (BIOS) is running prior to the OS. Shares sealed password to a user of the computer system which cannot unseal and access password in the OS but can provide/use it during BIOS without ever knowing the real password.
5. Security procedure: attestation of device state - a quote of a signed report describing currently recorded first HASH value used for verifying an expected first HASH value.
6. Security procedure: detecting a reboot between transactions - a quote from a security module 100 includes a reset count that will inform how many times a computer system platform has rebooted. Between several quotes it is possible to detect if the computer system platform has unknowingly rebooted, i.e., if an adversary has rebooted software to compromised state and back again into the trusted state.

Therefore, the first security policy SP1 for the computer system 200 may at least comprise without being limited thereto one or more in the group comprising: a security state, a secure key, a password; a data access; a hardware access; and an attestation procedure.

In step VIII in Fig. 9, the computer system 200 is impacted by the first security policy SP1 determined by the security module 100. Two main cases can be identified regarding the implementation of the first security policy SP1 so as to impact the computer system 200, i.e., through explicit signaling or by controlling access to security resources and security procedures. For example, a security key or a password may be signaled to the computer system 200 in an optional signaling as shown in Fig. 9. The explicit signaling of the security key or password of the first security policy SP1 may be performed according to security policy control signaling. The computer system 200 having received the security key or the password can use them in the secure electronic system 500. In another case, the security module 100 is configured to control whether the computer system 200 will have access to security resources and procedures according to the first security policy SP1, e.g., by controlling the security state of the computer system 200.

However, if a verification outcome at the security module 100 indicates that the computer system 200 is an incorrect system and cannot be trusted, e.g., have been tampered or in any other way is considered unreliable, measures will be taken so as to stop threats to the secure electronic system 500. For example, the computer system 200 may be halted, rebooted, disconnected from other devices in the secure electronic system 500, or in any other way limited from acting in a normal way. This would imply that the computer system 200 will not have access to any security functions or procedures in a negative outcome.

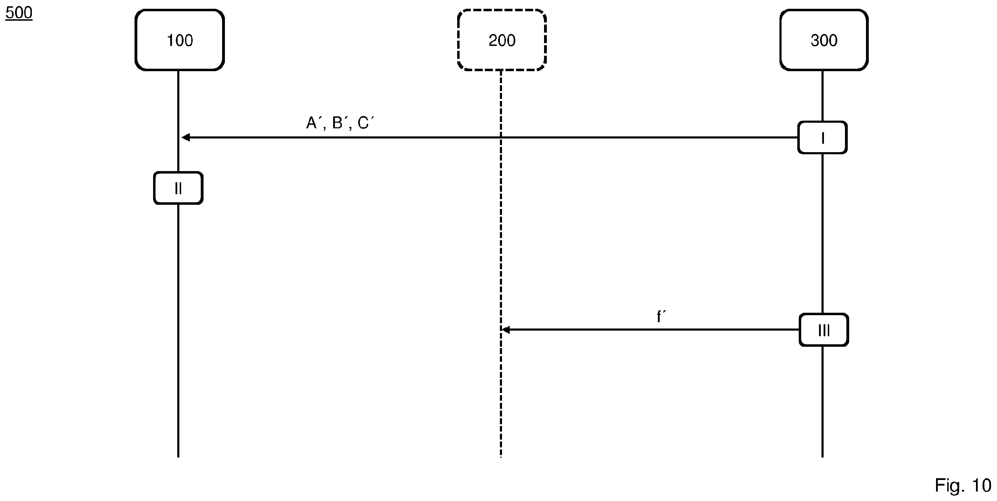

Moreover, Fig. 10 shows a signaling diagram illustrating the transfer of second HASH values from an attestation server 300 to a security module 100 according to embodiments of the invention.

In step I in Fig. 10, the attestation server 300 transmits at least one second HASH value A', B', C' to the security module 100. The attestation server 300 has previously obtained a security module random number @ associated with the security module 100 and the computer system 200. Based on the obtained security module random number @ and a hardware value of the computer system 200 the attestation server 300 has computed/generated at least one second HASH value A', B', C' for the computer system 200.

The attestation server 300 may obtain the security module random number @ in a number of different ways. For example, mentioned security module random number @ may be received from the security module 100. In other examples, the security module random number @ may be stored in a memory e.g., in a table accessible by the attestation server 300. In yet further examples, the security module random number @ may be generated by the attestation server 300 and provided to the security module 100 beforehand and thereafter received from the security module 100.

The hardware value of the computer system 200 may be known to the attestation server 300 by querying a computer system vendor server or from a vendor provided look-up-table installed on the attestation server 300. Here a computer system vendor (or system owner) refers to the entity responsible for defining or having knowledge of the hardware value in the computer system 200. Thus, the hardware value may be known to the attestation server 300 as part of the production procedure. One example of this could be that the hardware value is electrical fused in production based on a random value generated by the attestation server, i.e., the e-fuse case. An alternative example is that the PUF value are extracted and stored in the attestation server 300 during the production of the attestation server 300.

As for computing the second HASH value A', B', C', the attestation server 300 may for improved security compute the second HASH value further based on at least one code image and/or at least one boot image of the computer system 200. This in analogy to the previously described procedure when the computer system 200 uses code and boot images for computing the first HASH value. Hence, parts or complete code and boot images can be used for computing the second HASH value. The attestation server 300 may obtain copies of the code image and/or a boot image of the computer system 200 by the system owner, system maintainer, system vendor, a trusted database or similar.

The attestation server 300 may also use executed instruction value and computer system footprint for computing the second HASH value in the similar manner as when the computer system 200 computes the first HASH value. The executed instruction value used by the attestation server 300 should replay/emulate/mimic the same code execution scenario that takes place in the computer system 200 in order to produce the same computer system footprint. This may e.g., be done in a simulation environment, where the hardware value can be adjusted or simply by feeding the hash engine of the attestation server 300 with the correct instruction values and the hardware value, e.g., using the Boolean operation if needed, to generate the correct second HASH value.

In step II in Fig. 10, the security module 100 receives the second HASH value A', B', C' from the attestation server 300. Based on the received second HASH value A', B', C' and a first HASH value A, B, C, the security module 100 may determine a first security policy SP1 for the computer system 200 according to embodiments of the invention. It may be noted that the first HASH value has previously been received from the computer system 200. The first security policy SP1 may be determined through a verification procedure by comparing the first HASH value(s) A, B, C, with the second HASH value(s) A', B', C' where the typical positive result would be that A is equal to A', B is equal to B' and C is equal to C' and so on. However, other rules could be defined to indicate good results, bad results, results with an offset, etc.

For yet improved security, the attestation server 300 may in embodiments of the invention also provide a second HASH function f' to the computer system 200 as shown in step III in Fig. 10. The second HASH function f' may be: i) the same as the first HASH function f, ii) complementary to the first HASH function f or iii) independent of the first HASH function f. For case i) the computer system 200 uses the first HASH function f or the second HASH function f' for computing the first HASH values, for case ii) the computer system 200 uses the first HASH function f and the second HASH function f' for computing the first HASH values, and for case iii) the computer system 200 uses the second HASH function f' for computing the first HASH values. Hence, the computer system 200 may receive a security module random number @ from the security module 100 and a second HASH function f' from the attestation server 300. Since the security module random number @ and the second HASH function f' may be provided by two separate security devices, the risk of successful malicious attack is further reduced.

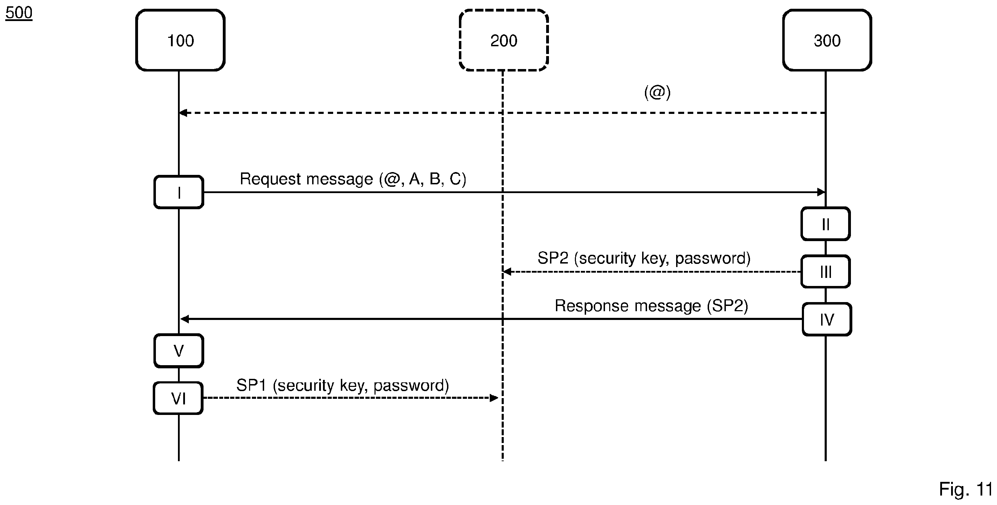

Fig. 11 shows a signaling diagram illustrating a request-response procedure between the security module 100 and the attestation server 300 according to yet further embodiments of the invention.

In step I in Fig. 11, the security module 100 transmits a security module random number @ and at least one first HASH value A, B, C to the attestation server 300 in a request message. The first HASH value A, B, C has previously been computed by the computer system 200 and sent to the security module 100 as described before.

In an alternative, the request message does not include the security module random number @ since the security module 100 has previously received the security module random number @ from the attestation server 300 illustrated with the dashed arrow.

In step II in Fig. 11, the attestation server 300 receives the first HASH value A, B, C for the computer system 200 and possibly the security module random number @. The attestation server 300 computes the second HASH value A', B', C' as previously described. Thereafter, a verification procedure is initiated which involves for the attestation server 300 to verify the first HASH value A, B, C based on the second HASH value A', B', C'. Hence, if the computer system 200 is to be trusted or not.

Depending on the outcome of the verification procedure in step II, the attestation server 300 may determine a second security policy SP2 for the computer system 200 based on the security module random number @ and the second HASH value A', B', C' in step V.

As aforementioned in respect of the first security policy SP1, the second security policy SP2 may relate to security resources and/or security procedures. Hence, the second security policy SP2 for the computer system 200 may also without being limited thereto comprises one or more in the group: a security state, a secure key, a password, a data access, a hardware access, and an attestation procedure. The second security policy SP2 may be implemented in the same way as for the first security policy SP1, i.e., by explicit signaling or by controlling security resources and procedures for the computer system 200. If explicit signaling is applied e.g., a security key or a password may be transferred to the computer system as illustrated with the dash arrow in step III Fig. 11.

In step IV in Fig. 11, the attestation server 300 transmits a response message to the security module 100. The response message indicates the second security policy SP2.

In step V in Fig. 11, the security module 100 determines a first security policy SP1 for the computer system 200 based on the second security policy SP2 received from the attestation server 300 in a response message.

Different embodiments are possible in the determination of the first security policy SP1 when using the second security policy SP2. In a first embodiment, the first security policy SP1 may be determined to be the same as the second security policy SP2, i.e., SP1 = SP2. In a second embodiment, at least a part or a section of the first security policy SP1 may be identical to a part or section of the second security policy SP2. In a third embodiment, the second security policy SP2 is used as an input to a determination algorithm or method for determining the first security policy SP1.

In step VI in Fig. 11, the security module 100 upon having determined the first security policy SP1 for the computer system 200 implements mentioned first security policy SP1 as previously described. For example, by security control signaling as illustrated with the dashed arrow in step VI in Fig. 11.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as previously mentioned a read-only memory (ROM), a programmable read-only memory (PROM), an erasable PROM (EPROM), a flash memory, an electrically erasable PROM (EEPROM), or a hard disk drive.

Moreover, it should be realized that the security module, the computer system and the attestation server comprise the necessary communication capabilities in the form of e.g., functions, means, units, elements, etc., for performing or implementing embodiments of the invention. Embodiments of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Therefore, the processor(s) of the security module, the computer system and the attestation server may comprise, e.g., one or more instances of a central processing unit (CPU), a processing unit, a processing circuit, a processor, an application specific integrated circuit (ASIC), a microprocessor, or other processing logic that may interpret and execute instructions. The expression "processor" may thus represent a processing circuitry comprising a plurality of processing circuits, such as e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A computer system (200) being configured to:
receive a security module random number (@) from a security module (100);
receive a HASH function (f, f') from the security module (100) and/or from an attestation server (300);
compute a first HASH value (A, B, C) based on the security module random number (@) and a hardware value of the computer system (200) and using the HASH function (f, f'); and
transmit the first HASH value (A, B, C) to the security module (100).

2. The computer system (200) according to claim 1, configured to:
compute the first HASH value (A, B, C) further based on an executed instruction value and
compute a computer system footprint value based on the executed instruction value, the hardware value and a Boolean operator; and
compute the first HASH value (A, B, C) further based on the computer system footprint value.

3. The computer system (200) according to any one of the preceding claims, configured to:
compute the first HASH value (A, B, C) further based on a code image of the computer system (200).

4. The computer system (200) according to any one of the preceding claims, wherein the hardware value is embedded in a hardware of the computer system (200).

5. The computer system (200) according to claim 4, wherein the hardware value is an e-fuse value or a physical unclonable function value.

6. The computer system (200) according to any one of the preceding claims, configured to:
transmit a random number request (R) to the security module (100) previous to receiving the security module random number (@) or
receive a security module random number (@) from the security module (100) for each hardware boot procedure of the computer system (200).

7. The computer system (200) according to any one of the preceding claims, configured to:
compute the first HASH value (A, B, C) further based on a boot image of a hardware boot procedure of the computer system (200).

8. A security module (100) being configured to:
transmit a security module random number (@) for computing a HASH value to a computer system (200);
transmit a HASH function (f) for computing a HASH value to the computer system (200);
receive a first HASH value (A, B, C) from the computer system (200), the first HASH value (A, B, C) being computed based on the security module random number (@) and a hardware value of the computer system (200) and using the HASH function (f); and
determine a first security policy for the computer system (200) based on the first HASH value (A, B, C).

9. The security module (100) according to claim 8, configured to:
determine the first security policy for the computer system (200) further based on the security module random number (@).

10. The security module (100) according to claim 8 or 9, configured to:
receive a second HASH value (A', B', C') from an attestation server (300); and
determine the first security policy for the computer system (200) further based on the second HASH value (A', B', C').

11. The security module (100) according to any one of claims 8 to 10, configured to:
transmit the security module random number (@) and the first HASH value (A, B, C) to an attestation server (300);
receive a second security policy for the computer system (200) from the attestation server (300); and
determine the first security policy for the computer system (200) further based on the second security policy.

12. The security module (100) according to any one of claims 8 to 10, configured to:
receive the security module random number (@) from an attestation server (300).

13. The security module (100) according to any one of claims 8 to 12, wherein the first security policy for the computer system (200) comprises one or more in the group: a security state, a secure key, a password, a data access, a hardware access, and an attestation procedure.

## Patentansprüche

1. Computersystem (200), das zu Folgendem konfiguriert ist:
Empfangen einer Zufallszahl (@) eines Sicherheitsmoduls von einem Sicherheitsmodul (100);
Empfangen einer HASH-Funktion (f, f') von dem Sicherheitsmodul (100) und/oder von einem Nachweisserver (300);
Berechnen eines ersten HASH-Werts (A, B, C) basierend auf der Zufallszahl (@) des Sicherheitsmoduls und einem Hardwarewert des Computersystems (200) und unter Verwendung der HASH-Funktion (f, f'); und
Übertragen des ersten HASH-Werts (A, B, C) an das Sicherheitsmodul (100).

2. Computersystem (200) nach Anspruch 1, das zu Folgendem konfiguriert ist:
Berechnen des ersten HASH-Werts (A, B, C) ferner basierend auf einem ausgeführten Anweisungswert und Berechnen eines Footprint-Werts des Computersystems basierend auf dem ausgeführten Anweisungswert, dem Hardwarewert und einem booleschen Operator; und
Berechnen des ersten HASH-Werts (A, B, C) ferner basierend auf dem Footprint-Wert des Computersystems.

3. Computersystem (200) nach einem der vorhergehenden Ansprüche, das zu Folgendem konfiguriert ist:
Berechnen des ersten HASH-Werts (A, B, C) ferner basierend auf einem Codeimage des Computersystems (200).

4. Computersystem (200) nach einem der vorhergehenden Ansprüche, wobei der Hardwarewert in eine Hardware des Computersystems (200) eingebettet ist.

5. Computersystem (200) nach Anspruch 4, wobei der Hardwarewert ein elektronischer Sicherungswert oder ein physikalischer nicht klonbarer Funktionswert ist.

6. Computersystem (200) nach einem der vorhergehenden Ansprüche, das zu Folgendem konfiguriert ist:
Übertragen einer Zufallszahlenanforderung (R) an das Sicherheitsmodul (100) vor Empfangen der Zufallszahl (@) des Sicherheitsmoduls oder
Empfangen einer Zufallszahl (@) des Sicherheitsmoduls von dem Sicherheitsmodul (100) für jeden Hardware-Startvorgang des Computersystems (200).

7. Computersystem (200) nach einem der vorhergehenden Ansprüche, das zu Folgendem konfiguriert ist:
Berechnen des ersten HASH-Werts (A, B, C) ferner basierend auf einem Startimage eines Hardware-Startvorgangs des Computersystems (200).

8. Sicherheitsmodul (100), das zu Folgendem konfiguriert ist:
Übertragen einer Zufallszahl (@) des Sicherheitsmoduls zum Berechnen eines HASH-Werts an ein Computersystem (200);
Übertragen einer HASH-Funktion (f) zum Berechnen eines HASH-Werts an das Computersystem (200);
Empfangen eines ersten HASH-Werts (A, B, C) von dem Computersystem (200), wobei der erste HASH-Wert (A, B, C) basierend auf der Zufallszahl (@) des Sicherheitsmoduls und einem Hardwarewert des Computersystems (200) und unter Verwendung der HASH-Funktion (f) berechnet wird; und
Bestimmen einer ersten Sicherheitsrichtlinie für das Computersystem (200) basierend auf dem ersten HASH-Wert (A, B, C).

9. Sicherheitsmodul (100) nach Anspruch 8, das zu Folgendem konfiguriert ist:
Bestimmen der ersten Sicherheitsrichtlinie für das Computersystem (200) ferner basierend auf der Zufallszahl (@) des Sicherheitsmoduls.

10. Sicherheitsmodul (100) nach Anspruch 8 oder 9, das zu Folgendem konfiguriert ist:
Empfangen eines zweiten HASH-Werts (A', B', C') von einem Nachweisserver (300); und
Bestimmen der ersten Sicherheitsrichtlinie für das Computersystem (200) ferner basierend auf dem zweiten HASH-Wert (A', B', C').

11. Sicherheitsmodul (100) nach einem der Ansprüche 8 bis 10, das zu Folgendem konfiguriert ist:
Übertragen der Zufallszahl (@) des Sicherheitsmoduls und des ersten HASH-Werts (A, B, C) an einen Nachweisserver (300);
Empfangen einer zweiten Sicherheitsrichtlinie für das Computersystem (200) von dem Nachweisserver (300); und
Bestimmen der ersten Sicherheitsrichtlinie für das Computersystem (200) ferner basierend auf der zweiten Sicherheitsrichtlinie.

12. Sicherheitsmodul (100) nach einem der Ansprüche 8 bis 10, das zu Folgendem konfiguriert ist:
Empfangen der Zufallszahl (@) des Sicherheitsmoduls von einem Nachweisserver (300).

13. Sicherheitsmodul (100) nach einem der Ansprüche 8 bis 12, wobei die erste Sicherheitsrichtlinie für das Computersystem (200) eines oder mehrere in der folgenden Gruppe umfasst: einen Sicherheitszustand, einen sicheren Schlüssel, ein Passwort, einen Datenzugriff, einen Hardwarezugriff und ein Nachweisprozedere.

## Revendications

1. Système informatique (200) étant configuré pour :
recevoir un numéro aléatoire de module de sécurité (@) en provenance d'un module de sécurité (100) ;
recevoir une fonction de HACHAGE (f, f') en provenance du module de sécurité (100) et/ou en provenance d'un serveur d'attestation (300) ;
calculer une première valeur de HACHAGE (A, B, C) sur la base du numéro aléatoire de module de sécurité (@) et d'une valeur matérielle du système informatique (200) et en utilisant la fonction de HACHAGE (f, f') ; et
émettre la première valeur de HACHAGE (A, B, C) vers le module de sécurité (100).

2. Système informatique (200) selon la revendication 1, configuré pour :
calculer la première valeur de HACHAGE (A, B, C) en outre sur la base d'une valeur d'instruction exécutée et calculer une valeur d'empreinte de système informatique sur la base de la valeur d'instruction exécutée, de la valeur matérielle et d'un opérateur booléen ; et
calculer la première valeur de HACHAGE (A, B, C) en outre sur la base de la valeur d'empreinte de système informatique.

3. Système informatique (200) selon l'une quelconque des revendications précédentes, configuré pour :
calculer la première valeur de HACHAGE (A, B, C) en outre sur la base d'une image de code du système informatique (200).

4. Système informatique (200) selon l'une quelconque des revendications précédentes, dans lequel la valeur matérielle est intégrée dans un matériel du système informatique (200).

5. Système informatique (200) selon la revendication 4, dans lequel la valeur matérielle est une valeur de fusible électronique ou une valeur de fonction physique non clonable.

6. Système informatique (200) selon l'une quelconque des revendications précédentes, configuré pour :
émettre une demande de numéro aléatoire (R) vers le module de sécurité (100) avant de recevoir le numéro aléatoire de module de sécurité (@) ou
recevoir un numéro aléatoire de module de sécurité (@) en provenance du module de sécurité (100) pour chaque procédure de démarrage matériel du système informatique (200).

7. Système informatique (200) selon l'une quelconque des revendications précédentes, configuré pour :
calculer la première valeur de HACHAGE (A, B, C) en outre sur la base d'une image de démarrage d'une procédure de démarrage matérielle du système informatique (200).

8. Module de sécurité (100) étant configuré pour :
émettre un numéro aléatoire de module de sécurité (@) pour calculer une valeur de HACHAGE vers un système informatique (200) ;
émettre une fonction de HACHAGE (f) pour calculer une valeur de HACHAGE vers le système informatique (200) ;
recevoir une première valeur de HACHAGE (A, B, C) en provenance du système informatique (200), la première valeur de HACHAGE (A, B, C) étant calculée sur la base du numéro aléatoire de module de sécurité (@) et d'une valeur matérielle du système informatique (200) et en utilisant la fonction de HACHAGE (f) ; et
déterminer une première politique de sécurité pour le système informatique (200) sur la base de la première valeur de HACHAGE (A, B, C).

9. Module de sécurité (100) selon la revendication 8, configuré pour :
déterminer la première politique de sécurité pour le système informatique (200) en outre sur la base du numéro aléatoire de module de sécurité (@).

10. Module de sécurité (100) selon la revendication 8 ou 9, configuré pour :
recevoir une deuxième valeur de HACHAGE (A', B', C') en provenance d'un serveur d'attestation (300) ; et
déterminer la première politique de sécurité pour le système informatique (200) en outre sur la base de la deuxième valeur de HACHAGE (A', B', C').

11. Module de sécurité (100) selon l'une quelconque des revendications 8 à 10, configuré pour :
émettre le numéro aléatoire de module de sécurité (@) et la première valeur de HACHAGE (A, B, C) vers un serveur d'attestation (300) ;
recevoir une deuxième politique de sécurité pour le système informatique (200) en provenance du serveur d'attestation (300) ; et
déterminer la première politique de sécurité pour le système informatique (200) en outre sur la base de la deuxième politique de sécurité.

12. Module de sécurité (100) selon l'une quelconque des revendications 8 à 10, configuré pour :
recevoir le numéro aléatoire de module de sécurité (@) en provenance d'un serveur d'attestation (300).

13. Module de sécurité (100) selon l'une quelconque des revendications 8 à 12, dans lequel la première politique de sécurité pour le système informatique (200) comprend un ou plusieurs éléments dans le groupe : un état de sécurité, une clé sécurisée, un mot de passe, un accès de données, un accès matériel, et une procédure d'attestation.
